# EUROPEAN PATENT APPLICATION

(11) **EP 2 829 844 A1**
(43) Date of publication of application: **28.01.2015**
(21) Application number: 12872119.8
(22) Date of filing: 21.03.2012
(51) Int. Cl.: G01C 21/26

(54) **NAVIGATION SYSTEM**

(71) Applicant: Honda Motor Co., Ltd., Minato-ku Tokyo 107-8556 (JP)
(72) Inventor: FUJIMOTO Naotoshi, Wako-shi, Saitama 351-0193 (JP)
(74) Representative: Herzog, Markus
(86) International application number: PCT/JP2012/057226
(87) International publication number: WO 2013/140557

(57) **Abstract**

A navigation system (1) includes a plurality of vehicles (2) and a server device (3) that is communication connectable with the plurality of vehicles (2). The plurality of vehicles (2) includes a control device (16) that transmits information to the server device regarding a current position during traveling and route information or destination information and a head-up display (15). The server device (3) includes a server control device (32) that transmits vehicle information on other vehicle to the each vehicles, the other vehicle being present within a predetermined range from the current position of the each vehicles (2) and having at least a part of the route information common with the each vehicles or having same destination information with the each vehicles. The control device (16) of vehicle (2) performs a marking-display to an external other vehicles on the head-up display on the basis of the vehicle information transmitted from the server device (3).

## Description

### Technical Field of the Invention

The present invention relates to a navigation system.

### Background Art

In the related art, a display device is known which can display a virtual image of a virtual preceding vehicle overlapping with an actual scene viewed by a driver when route guidance is provided by a navigation apparatus of an own vehicle and which displays a frame surrounding a preceding vehicle on a front window so as to overlap with the preceding vehicle when the preceding vehicle is actually present (for example, see Patent Document 1).

### Prior Art Documents

### Patent Documents

Patent Document 1: Japanese Unexamined Patent Application, First Publication No. 2005-69800

### Summary of the Invention

### Problems to be Solved by the Invention

On the other hand, in the display device according to the related art, when an actual preceding vehicle is present, it is possible to prevent the occurrence of problems such as a position gap between a virtual image and an actual traveling course or a decrease in visibility by displaying a frame surrounding the actual preceding vehicle instead of displaying a virtual image of a virtual preceding vehicle.

However, it cannot be said that a preceding vehicle is useful for route guidance of an own vehicle just by marking the preceding vehicle, which is traveling in front of the own vehicle (that is, pre-running vehicle), with a frame. The route guidance of the preceding vehicle may be different from the route guidance of the own vehicle and thus there is a problem in that the desired usefulness cannot be secured.

Also, it cannot be said that a preceding vehicle is always present. In this case, the visibility may decrease due to the display of a virtual image.

The present invention is made in consideration of the above-mentioned circumstances and an object thereof is to provide a navigation system that can improve the usefulness and convenience of route guidance.

### Means for Solving the Problems

In order to achieve the above-mentioned object, the present invention employs the following aspects.
(1) According to an aspect of the present invention, there is provided a navigation system including: a plurality of vehicles; and a server device that is communication connectable with the plurality of vehicles; wherein each of the plurality of vehicles includes a vehicle control unit configured to transmit information to the server device regarding a current position during traveling and route information or destination information and a head-up display that employs a predetermined area of a front window or an area of the front window, which overlaps with an external scene over the front window when viewed from a driver, as a display screen, or a display device that displays an external image captured by an imaging unit, which is used to image a predetermined area of the external scene, on a display screen disposed at a position in an interior of the vehicle other than the front window, wherein the server device includes a server control unit configured to transmit vehicle information on other vehicle to the each vehicles, the other vehicle being present within a predetermined range from the current position of the each vehicles and having at least a part of the route information common with the each vehicles or having same destination information with the each vehicles, and wherein the vehicle control unit performs a marking-display to the other vehicle in the display screen based on the vehicle information transmitted from the server device.
(2) In the navigation system according to (1), the vehicle control unit may change the marking-display depending on types of the other vehicles.
(3) In the navigation system according to (1) or (2), the server control unit may transmit only the vehicle information on the other vehicle closest to the vehicle when a plurality of the other vehicles are present within the predetermined range, the plurality of the other vehicles being able to display the marking-display by the vehicle control unit.
(4) In the navigation system according to any one of (1) to (3), the vehicle control unit may maintain the marking-display only in a period from a predetermined time prior to a time point at which the vehicle needs to perform a course changing to a time point at which the course changing is finished.
(5) In the navigation system according to any one of (1) to (4), the vehicle may include a detection unit configured to detect a lighting state of a direction indicator light of a pre-running vehicle, and wherein the vehicle control unit may perform the marking-display mark a pre-running vehicle, when the other vehicle is not the pre-running vehicle and a traveling direction indicated by the lighting of the direction indicator light of the pre-running vehicle matches a traveling direction of the vehicle.

### Effect of the Invention

In the navigation system according to the aspect of (1), other vehicle which is able to be marked is not limited to a pre-running vehicle of each of the vehicles and a plurality of other vehicles may be present. Additionally, the other vehicles and the each of the vehicles are appropriately correlated with each other on the basis of route information and destination information thereof.

Accordingly, it is possible to provide route guidance through the use of a plurality of other vehicles in an actual scene and to improve the usefulness and convenience of route guidance.

By employing the navigation system according to (2), even when the plurality of other vehicles which can be marked are present, it is possible to secure desired visibility and to enable a driver to easily select the other vehicles.

By employing the navigation system according to (3), it is possible to reduce an amount of communication data when vehicle information on other vehicles is transmitted from the server device to each of the vehicles.

By employing the navigation system according to (4), it is possible to prevent excessively-frequent marking, to prevent a decrease in visibility of a display on a display screen, and to perform marking at an appropriate timing.

In the navigation system according to (5), it is possible to improve usefulness and convenience by marking a pro-running vehicle so as to be easily visually recognized by a driver.

For example, even when vehicle information on other vehicles is not received from the server device, it is possible to appropriately provide route guidance on the basis of lighting of a direction indicator light of a pre-running vehicle.

### Brief Description of Drawings

FIG. 1 is a diagram showing a configuration of a navigation system according to an embodiment of the present invention.
FIG. 2 is a diagram showing an example of a display screen of a head-up display mounted on a vehicle in the navigation system according to the embodiment of the present invention.
FIG. 3 is a diagram showing an example of a display screen of a head-up display mounted on a vehicle in the navigation system according to the embodiment of the present invention.
FIG. 4 is a diagram showing an example of other vehicles present around a vehicle in the navigation system according to the embodiment of the present invention.

### Description of Embodiments

Hereinafter, a navigation system according to an embodiment of the present invention will be described with reference to the accompanying drawings.

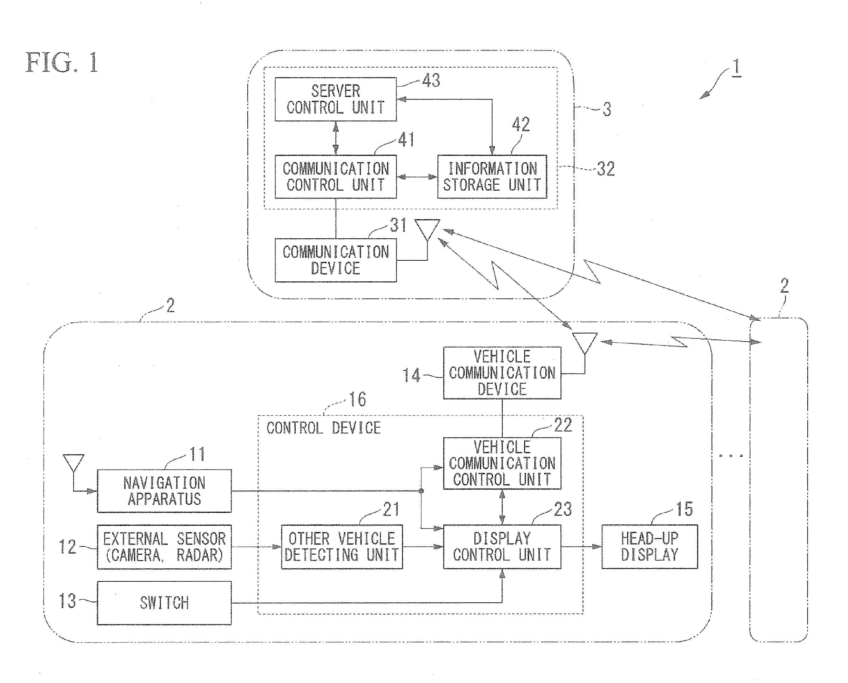

A navigation system 1 according to this embodiment includes a plurality of vehicles 2 and a server device 3 that is able to communicate with the vehicles 2, for example, as shown in FIG. 1. The vehicles 2 and the service device 3 constitute a client-server wireless network system used to transmit and receive a variety of information.

For example, each vehicle 2 includes a navigation apparatus 11, an external sensor 12, a switch 13, a vehicle communication device 14, a head-up display 15, and a control device 16.

The navigation apparatus 11 receives a positioning signal such as a global positioning system (GPS) signal used to measure the position of the vehicle 2 using artificial satellites and detects the current position of the vehicle 2 on the basis of the positioning signal.

The navigation apparatus 11 is able to detect the current position of the vehicle 2 by using a calculation processing of autonomous navigation based on the speed, the yaw rate, and the like of the vehicle 2 together.

The navigation apparatus 11 stores map data used to display a map on a display screen of, for example, a head-up display 15.

The map data includes, for example, road coordinate data indicating a position coordinate on a road required for a map matching process based on the current position of a vehicle 2 and road data required for processes such as route search or route guidance.

The road data includes, for example, nodes which are coordinate points having latitude and longitude of predetermined positions on a road such as crossing points and branch points, links which are lines connecting the nodes, road shapes, road types, road width data, and speed limits.

The navigation apparatus 11, for example, performs a map matching on the stored map data on the basis of information of a current position of a vehicle 2 and controls a display of the map and the current position of the vehicle 2 on the display screen.

The navigation apparatus 11, for example, performs processes such as route search or route guidance of the vehicle 2 and adds a variety of information such as route information of a destination or transit points to the map display on the display screen.

The external sensor 12, for example, includes an imaging device (not shown) having a camera and a radar device (not shown) using electromagnetic waves such as infrared laser beams or millimeter waves.

For example, the imaging device performs a predetermined image process on an image obtained by imaging an imaging area set in an external scene (such as an external scene on the front side in the traveling direction) of the vehicle 2 to generate image data and outputs the image data.

For example, the radar device partitions a detection target area set in the external scene (such as an external scene on the front side in the traveling direction) of the vehicle 2 into a plurality of angle areas and emits transmission signals of electromagnetic waves so as to scan the each of the angle areas. The radar device receives reflection signals generated by reflection of the transmission signals from external objects (such as other vehicles or structures) or pedestrians outside the vehicle 2, and generates a detection signal on the distance from the radar device to the external objects or pedestrians.

The switch 13 outputs, for example, various signals relevant to traveling control of the vehicle 2.

The various signals output from the switch 13 include, for example, a signal relevant to an operation state (such as a lighting operation) of a direction indicator light by a driver and a signal relevant to an operation state (such as an operation position) of a brake pedal or an accelerator pedal by the driver.

The vehicle communication device 14 is able to perform bidirectional communication with, for example, the server device 3 outside the vehicle 2 and other vehicles 2 and thus transmits and receives a variety of information.

The head-up display 15 performs a display by projection or the like using a predetermined area of a front window FW or an area overlapping with an external scene over the front window when viewed from a driver as a display screen.

The control device 16, for example, includes other vehicle detecting unit 21, a vehicle communication control unit 22, and a display control unit 23.

The other vehicle detecting unit 21 detects other vehicles traveling around the vehicle 2 (for example, on the front side in the traveling direction) on the basis of the image data and the detection signal output from the external sensor 12.

The vehicle communication control unit 22 controls transmission and reception of a variety of information through the use of the vehicle communication device 14.

For example, the vehicle communication control unit 22 transmits information (position information) on the current position of the vehicle 2 detected by the navigation apparatus 11 at an appropriate time and route information such as a guide route, and destination information such as transit points or a destination set by the navigation apparatus 11, to the server device 3.

The display control unit 23 performs a marking-display against the external other vehicles on the display screen of the head-up display 15 on the basis of vehicle information on other vehicles transmitted from the server device 3 as will be described later.

The server device 3 includes, for example, a communication device 31 and a server control device 32.

The communication device 31 is able to communicate with the vehicle communication device 14 of the vehicle 2 and thus transmits and receives a variety of information by a direct wireless communication connection with the vehicle communication device 14 of the vehicle 2 or a communication connection via a predetermined communication network.

The server control device 32 includes, for example, a communication control unit 41, an information storage unit 42, and a server control unit 43.

The communication control unit 41 controls, for example, transmission and reception of a variety of information through the use of the communication device 31.

For example, the communication control unit 41 acquires the position information, the route information, and the destination information of the vehicles 2 transmitted from the vehicles 2 and received by the communication device 31, and outputs the acquired information to the information storage unit 42.

The information storage unit 42 stores the position information, the route information, and the destination information of each of the vehicles 2 received by the communication device 31.

The information storage unit 42 stores, for example, a variety of information generated by the server control unit 43 on the basis of the position information, the route information, and the destination information of each of the vehicles 2.

The server control unit 43 extracts, for example, other vehicles 2 (other vehicles) out of the vehicles 2 which are present within a predetermined range from the current position of each vehicle 2 and of which at least a part of the route information is common with the each vehicles 2 or which have the same destination information with the each vehicles 2 on the basis of the information stored in the information storage unit 42 and the information received by the communication device 31. The vehicle information (for example, the position information and the information on the relationships among the vehicles 2) of the extracted other vehicles 2 (other vehicles) is transmitted to each of the vehicles 2.

The navigation system 1 according to this embodiment includes the above-mentioned configuration and the operation of the navigation system 1 will be described below.

For example, when the current position of a vehicle 2 is detected by the navigation apparatus 11 and at least the route information or the destination information is set by the navigation apparatus 11, the vehicle communication control unit 22 of each vehicle 2 first transmits such information to the server device 3.

For example, when each of the information transmitted from the vehicles 2 are received by the communication device 31, the server control device 32 of the server device 3 stores each of the information in the information storage unit 42 in correlation with each other. Then, other vehicles 2 (other vehicles) which are present within a predetermined range from the current position of vehicle 2 and of which at least a part of the route information is common with the each vehicles 2 or which have the same destination information with the each vehicles 2 are extracted on the basis of the received information of the vehicles 2 and each of the information of the other vehicles 2 already stored in the information storage unit 42. The server device generates information on the relationship of the extracted other vehicles 2 (other vehicles) and each of the vehicles 2. and transmits the vehicle information including the generated information and the position information to each of the vehicles 2.

The information regarding the relationship with each of the vehicles 2 includes, for example, information on the vehicles having the same destination, information on the vehicles having different destinations but having the same traveling direction, or information on the vehicles traveling in the same direction.

For example, when only the position information and the destination information are received from each of the vehicles 2, the server control device 32 of the server device 3 may generate route information such as guide route based on the received information.

For example, when the vehicle information on other vehicles transmitted from the server device 3 is received by the vehicle communication device 14, the display control unit 23 of the vehicle 2 extracts other vehicles which are present in a viewing field (for example, an external scene over the front window when viewed from a driver) of the driver of the vehicle 2 on the basis of the received vehicle information.

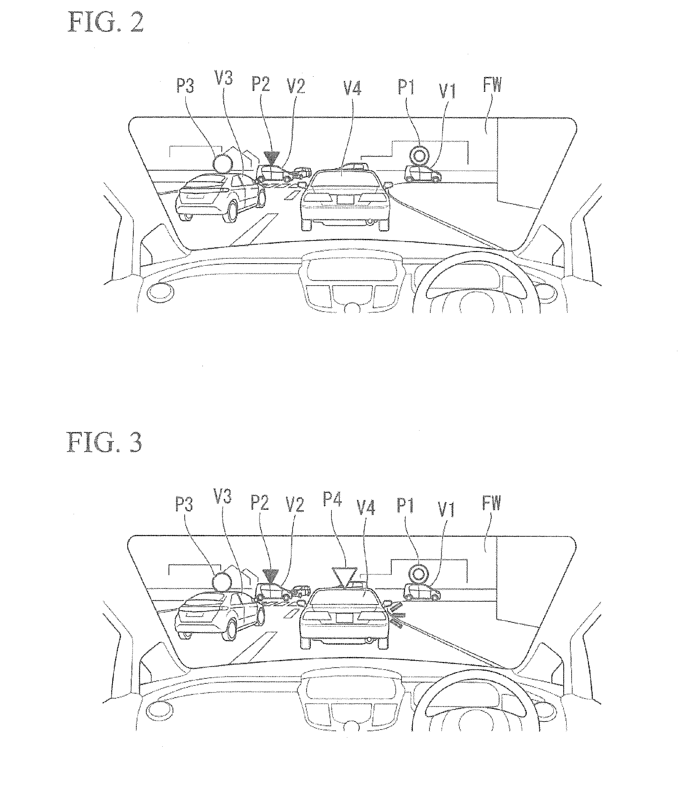

For example, as shown in FIG. 2, the display control unit performs a marking-display against the other vehicles 2 with different displaying styles according to information relating to the relationship with the vehicle 2.

For example, as shown in FIG. 2, other vehicle (first other vehicle) V1 having the same destination (destination A) as the vehicle 2 is marked with an image P1 of a yellow double circle.

For example, other vehicle (second other vehicle) V2 having a destination (destination B) different from the destination of the vehicle 2 but having the same traveling direction is marked with an image P2 of a red inverted triangle.

For example, other vehicle (third other vehicle) V3 economically traveling in the same direction as the vehicle 2 is marked with an image P3 of a green circle.

The other vehicle (third other vehicle) V3 economically traveling is, for example, a vehicle having a function searching a route for economical traveling as a guide route to a destination or a vehicle having a function of notifying an economical traveling state. Information on whether each vehicle 2 has such a function is transmitted in advance from each of the vehicle 2 to the server device 3 and is reflected in details of the vehicle information on other vehicles transmitted from the server device 3 to each of the vehicles 2.

For example, as shown in FIG. 2, since the vehicle information on the other vehicle (fourth other vehicle) V4 traveling immediately in front of the vehicle 2 is not received from the server device 3, a marking-display is not performed against the fourth other vehicle.

In the marking-display in the vehicle 2, for example, each of the images of the marking-display, which are overlapping with an external scene over the front window, may be displayed on the display screen of the head-up display 15. Alternatively, image data obtained by overlapping each of the images of the marking-display with an image data of the front side in the traveling direction of the vehicle 2 obtained by the image operation of the imaging device of the external sensor 12 may be displayed on the display screen of the head-up display 15.

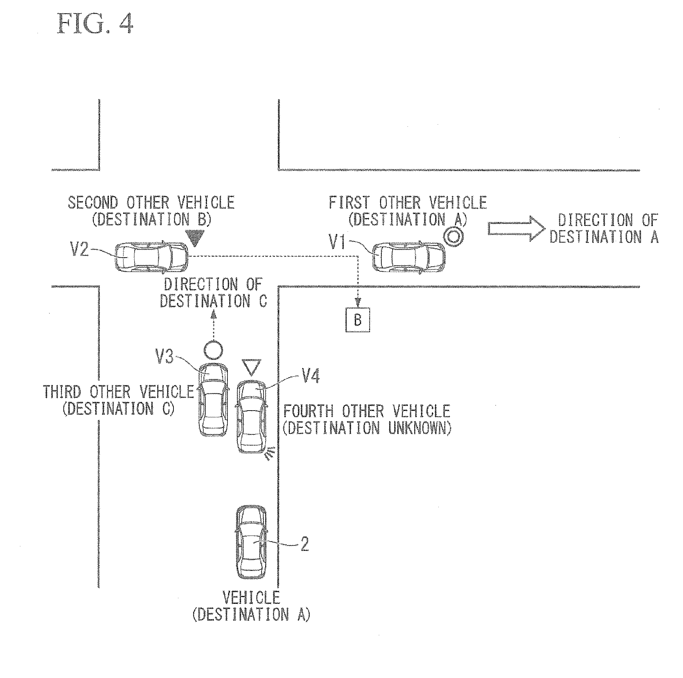

For example, when the vehicle information on a pre-running vehicle of the vehicle 2 is not received from the server device 3 and the traveling direction indicated by the lighting of the direction indicator light of the pre-running vehicle matches the traveling direction of the vehicle 2, the display control unit 23 of the vehicle 2 may perform a marking-display against the pre-running vehicle as, for example, shown in FIGS. 3 and 4.

For example, in FIGS. 3 and 4, the destination of the other vehicle (fourth other vehicle) V4, which is a pre-running vehicle traveling immediately in front of the vehicle 2, is not clear but it is detected that the traveling direction thereof (for example, the right turning direction at a front intersection) matches the traveling direction of the vehicle 2 on the basis of the image data output from the external sensor 12 or the like. In this case, a marking-display against the fourth other vehicle V4 is performed with an image P4 of a yellow inverted triangle.

For example, when the traveling direction of the other vehicle, which has been executed a marking-display, is changed to a direction different from the traveling direction of the vehicle 2, the display control unit 23 of the vehicle 2 immediately stops the performance of the marking-display.

The change of the traveling direction of the other vehicle is able to be acquired, for example, on the basis of the vehicle information sequentially transmitted from the server device 3, and is able to be detected on the basis of the image data output from the external sensor 12 or the like.

For example, when other vehicle of which at least a part of route information is common or which has the same destination information is newly extracted, the display control unit 23 of the vehicle 2 is able to immediately start the marking-display.

As described above, in the navigation system 1 according to this embodiment, the other vehicle which can be marked is not limited to a pre-running vehicle of each of the vehicles 2 but a plurality of other vehicles are present which can be marked. Also, these other vehicles and each of the vehicles 2 are appropriately correlated with each other on the basis of the route information or the destination information.

Accordingly, it is possible to provide route guidance using a plurality of appropriate other vehicles in an actual scene and thus to improve usefulness and convenience of route guidance.

By performing the marking-display against each of the other vehicles with a different display styles on the basis of information on the relationship with the vehicle 2, it is possible to secure desired visibility even when a plurality of other vehicles which can be marked are present, and it is thus possible to allow a driver to easily select other vehicles.

Even when the vehicle information on a pre-running vehicle of the vehicle 2 is not received from the server device 3, it is possible to appropriately provide route guidance using other vehicles which can be easily visually recognized by a driver by preforming the marking-display depending on the lighting of the direction indicator light of the pre-running vehicle, and it is thus possible to improve usefulness and convenience.

In the above-mentioned embodiment, the marking-display is performed against the plurality of other vehicles around the current position of the vehicle 2, but the present invention is not limited to this configuration. For example, when a plurality of other vehicles which can be marked are present within a predetermined range from the current position of the vehicle 2, the server control device 32 of the server device 3 may transmit only the vehicle information on the other vehicle closest to the vehicle 2 to the vehicle 2.

In this case, it is possible to reduce an amount of transmission data at the time of transmitting the vehicle information on the other vehicles from the server device 3 to each of the vehicles 2.

In the above-mentioned embodiment, the marking-display is performed when other vehicle of which at least a part of the route information is common or which has the same destination information is present, but the present invention is not limited to this configuration. The display control unit 23 of the vehicle 2 may maintain the marking-display, for example, only in a period from a predetermined time prior to a time point at which the vehicle 2 needs to perform a course changing to a time point at which the course changing is completed.

In this case, it is possible to prevent excessively-frequent marking-display, to prevent interference with a driver's viewing field to an external scene or a decrease in visibility of a display on the display screen, and to perform a marking-display at an appropriate time.

In the above-mentioned embodiment, the display control unit 23 may perform a display on a display screen of another display such as a multi-information display (MID) instead of the head-up display 15.

For example, the MID is a display that performs a display on a meter panel including meters such as a vehicle speed meter or a rotational speed meter at a position corresponding to the front side of a driver seat in an instrument panel.

### Industrial Applicability

According to the present invention, it is possible to provide a navigation system that can improve usefulness and convenience of route guidance.

### Reference Signs List

1: navigation system
2: vehicle
3: server device
11: navigation apparatus
12: external sensor (imaging unit, detection unit)
13: switch
14: vehicle communication device
15: head-up display
16: control device (vehicle control unit)
21: other vehicle detecting unit
22: vehicle communication control unit
23: display control unit
31: communication device
32: server control device (server control unit)
41: communication control unit
42: information storage unit
43: server control unit

## Claims

1. A navigation system comprising:
a plurality of vehicles; and
a server device that is communication connectable with the plurality of vehicles,
wherein each of the plurality of vehicles includes:
a vehicle control unit configured to transmit information to the server device regarding a current position during traveling and route information or destination information; and
a head-up display that employs a predetermined area of a front window or an area of the front window, which overlaps with an external scene over the front window when viewed from a driver, as a display screen, or a display device that displays an external image captured by an imaging unit, which is used to image a predetermined area of the external scene, on a display screen disposed at a position in an interior of the vehicle other than the front window,
wherein the server device includes a server control unit configured to transmit vehicle information on other vehicle to the each vehicles, the other vehicle being present within a predetermined range from the current position of the each vehicles and having at least a part of the route information common with the each vehicles or having same destination information with the each vehicles, and
wherein the vehicle control unit performs a marking-display to the other vehicle in the display screen based on the vehicle information transmitted from the server device.

2. The navigation system according to claim 1, wherein the vehicle control unit changes the marking-display depending on types of the other vehicle.

3. The navigation system according to claim 1 or 2, wherein the server control unit transmits only the vehicle information on the other vehicle closest to the vehicle when a plurality of the other vehicles are present within the predetermined range, the plurality of the other vehicles being able to display the marking-display by the vehicle control unit.

4. The navigation system according to any one of claims I to 3, wherein the vehicle control unit maintains the marking-display only in a period from a predetermined time prior to a time point at which the vehicle needs to perform a course changing to a time point at which the course changing is completed.

5. The navigation system according to any one of claims 1 to 4, wherein the vehicle includes a detection unit configured to detect a lighting state of a direction indicator light of a pre-running vehicle, and
wherein the vehicle control unit performs the marking-display to the pre-running vehicle, when the other vehicle is not the pre-running vehicle and a traveling direction indicated by the lighting of the direction indicator light of the pre-running vehicle matches a traveling direction of the vehicle.

## Amended claims

### Amended claims under Art. 19.1 PCT

**1.** (Amended) A navigation system comprising:
a plurality of vehicles; and
a server device that is communication connectable with the plurality of vehicles,
wherein each of the plurality of vehicles includes:
a vehicle control unit configured to transmit information to the server device regarding a current position during traveling and route information or destination information; and
a head-up display that employs a predetermined area of a front window or an area of the front window, which overlaps with an external scene over the front window when viewed from a driver, as a display screen, or a display device that displays an external image captured by an imaging unit, which is used to image a predetermined area of the external scene, on a display screen disposed at a position in an interior of the vehicle other than the front window,
wherein the server device includes a server control unit configured to transmit vehicle information on other vehicle to the each vehicles, the other vehicle being present within a predetermined range from the current position of the each vehicles and having at least a part of the route information common with the each vehicles or having same destination information with the each vehicles, and
wherein the vehicle control unit performs different marking-displays against the other vehicles on the display screen based on the vehicle information transmitted from the server device in order to distinguish the other vehicle of which the destination information is different but a traveling direction is same with the each vehicles and the other vehicle of which the destination information is same with the each vehicles.

**2.** (Amended) A navigation system comprising:
a plurality of vehicles; and
a server device that is communication connectable with the plurality of vehicles,
wherein each of the plurality of vehicles includes:
a vehicle control unit configured to transmit information to the server device regarding a current position during traveling and route information or destination information; and
a head-up display that employs a predetermined area of a front window or an area of the front window, which overlaps with an external scene over the front window when viewed from a driver, as a display screen, or a display device that displays an external image captured by an imaging unit, which is used to image a predetermined area of the external scene, on a display screen disposed at a position in an interior of the vehicle other than the front window,
wherein the server device includes a server control unit configured to transmit vehicle information on other vehicle to the each vehicles, the other vehicle being present within a predetermined range from the current position of the each vehicles and having at least a part of the route information common with the each vehicles or having same destination information with the each vehicles, and
wherein the vehicle control unit performs different marking-displays against the other vehicles on the display screen based on the vehicle information transmitted from the server device in order to distinguish the other vehicle of which the destination information is different but a traveling direction is same with the each vehicles and the other vehicle of which traveling in a same direction with the each vehicles in an economical traveling state.

**3.** The navigation system according to claim 1 or 2, wherein the server control unit transmits only the vehicle information on the other vehicle closest to the vehicle when a plurality of the other vehicles are present within the predetermined range, the plurality of the other vehicles being able to display the marking-display by the vehicle control unit.

**4.** The navigation system according to any one of claims 1 to 3, wherein the vehicle control unit maintains the marking-display only in a period from a predetermined time prior to a time point at which the vehicle needs to perform a course changing to a time point at which the course changing is completed.

**5.** The navigation system according to any one of claims 1 to 4, wherein the vehicle includes a detection unit configured to detect a lighting state of a direction indicator light of a pre-running vehicle, and
wherein the vehicle control unit performs the marking-display to the pre-running vehicle, when the other vehicle is not the pre-running vehicle and a traveling direction indicated by the lighting of the direction indicator light of the pre-running vehicle matches a traveling direction of the vehicle.

Claim 1 is amended to "∼ the vehicle control unit performs different marking-displays against the other vehicles on the display screen based on the vehicle information transmitted from the server device in order to distinguish the other vehicle of which the destination information is different but a traveling direction is same with the each vehicles and the other vehicle of which the destination information is same with the each vehicles."
Claim 2 is amended to "∼the vehicle control unit performs different marking-displays against the other vehicles on the display screen based on the vehicle information transmitted from the server device in order to distinguish the other vehicle of which the destination information is different but a traveling direction is same with the each vehiclesand the other vehicle of which traveling in a same direction with the each vehicles in an economical traveling state.".
These amendments are based on a description in Paragraph 0041 of the specification.
